# EUROPÄISCHE PATENTSCHRIFT

(11) **EP 1 459 488 B1**
(45) Veröffentlichungstag und Bekanntmachung des Hinweises auf die Patenterteilung: **23.01.2008**
(21) Anmeldenummer: 02776847.2
(22) Anmeldetag: 23.10.2002
(51) Int. Cl.: H04L 25/02, H04L 25/49

(54) **VERFAHREN UND VORRICHTUNG ZUR BIDIREKTIONALEN SIMPLEX-ÜBERTRAGUNG VON DATEN**
METHOD AND DEVICE FOR A BI-DIRECTIONAL HALF-DUPLEX TRANSMISSION OF DATA
PROCEDE ET DISPOSITIF DE TRANSMISSION BIDIRECTIONNELLE DE DONNEES A L'ALTERNAT

(30) Priorität: 14.12.2001 DE 10161656
(43) Veröffentlichungstag der Anmeldung: 22.09.2004
(73) Patentinhaber: ROBERT BOSCH GMBH, 70442 Stuttgart (DE)
(72) Erfinder: JUNGER, Andreas, 72770 Reutlingen (DE); MORITZ, Rainer, 70794 Filderstadt (DE); LUEDERS, Uwe, 72770 Reutligen (DE); ELBRACHT, Berthold, 72768 Reutlingen (DE); HAENSEL, Jens, 71229 Leonberg (DE); KOSTORZ, Wolfgang, 71638 Ludwigsburg (DE)
(86) Internationale Anmeldenummer: PCT/DE2002/003990
(87) Internationale Veröffentlichungsnummer: WO 2003/053018

(56) Entgegenhaltungen:
- DE-A- 19 813 964
- DE-A- 19 946 776
- US-A- 3 366 880
- US-A- 5 764 727
- US-A- 5 892 893
- US-A- 6 094 696

## Beschreibung

### Technisches Gebiet

Die vorliegende Erfindung betrifft ein Verfahren sowie eine Vorrichtung zum bidirektionalen Übertragen von Daten.

### Stand der Technik

Verfahren sowie Vorrichtungen der eingangs genannten Art sind beispielsweise im Rahmen der digitalen Kommunikation über Stromschnittstellen aus Automobil- und industriellen Anwendungen bekannt.

Allerdings werden bei derartigen Verfahren und Vorrichtungen zumeist mindestens zwei Signalleitungen eingesetzt, um eine bidirektionale Kommunikation zwischen den Kommunikationsteilnehmern zu ermöglichen.

Aus der DE 199 46 776 A1 ist ein bidirektionales Kommunikationsverfahren zwischen zwei Teilnehmern bekannt. Zum Erzeugen der über den Kommunikationspfad zwischen den Teilnehmern zu übertragenden Signale wird die Stromquelleneinheit des Senders entsprechend getaktet. Im Empfänger werden diese getakteten Signale ausgewertet.

Aus der US 3,366,880 ist es bekannt zur Entkopplung zwischen Sender- und Empfängerteil eines Transceivers das Senderteil nur einzuschalten, wenn Daten gesendet werden und ansonsten das Empfängerteil einzuschalten.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren sowie eine Vorrichtung der eingangs genannten Art so weiterzubilden, dass eine "automotive"-taugliche Schnittstelle zur digitalen Kommunikation auf einer Signalleitung geschaffen ist.

Diese Aufgabe wird durch ein Verfahren mit den im Anspruch 1 angegebenen Merkmalen sowie durch eine Vorrichtung mit den im Anspruch 3 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Gemäß der Lehre der vorliegenden Erfindung erfolgt mithin eine bidirektionale serielle Übertragung der in Form von Signalen vorliegenden Daten auf Strommodulationsbasis im "Master/Slave"-Betrieb mit nur einer als Kommunikationspfad ausgebildeten Signalleitung.

Die Daten werden hierbei zwischen mindestens zwei Kommunikationsteilnehmern ausgetauscht, wobei die Kommunikationsteilnehmer in erfindungswesentlicher Weise im wesentlichen symmetrisch aufgebaut sind und jeder der Kommunikationsteilnehmer
- mindestens eine schaltbare Verbrauchereinheit,
- mindestens eine der Verbrauchereinheit zugeordnete schaltbare Stromquellemeinheit und
- mindestens eine der Verbrauchereinheit zugeordnete Komparatoreinheit
aufweist.

Erfindungsgemäß wird jedem der vorzugsweise zwei Kommunikationsteilnehmer beim Übertragen der Daten zumindest temporär, das heißt zumindest während der Dauer der Übertragung der Daten die Funktion eines Senders bzw. zumindest temporär, das heißt zumindest während der Dauer der Übertragung der Daten die Funktion eines Empfängers zugeordnet.

Dies bedeutet mit anderen Worten, daß die mit dem Kommunikationspfad verbundenen Kommunikationsteilnehmer jeweils abwechselnd als aktiver, stromeinspeisender Sender oder als passiver Empfänger geschaltet werden können, indem verfahrensgemäß
- vor dem Übertragen der Signale die Verbrauchereinheit des Senders abgeschaltet wird,
- zum Erzeugen der über den Kommunikationspfad zu übertragenden Signale die Stromquelleneinheit des Senders entsprechend getaktet wird,
- die auf diese Weise erzeugten Signale über den Kommunikationspfad übertragen werden, so daß an der dem Empfänger zugeordneten Komparatoreinheit entsprechende Ausgangssignale entstehen, und
- nach dem Übertragen die Verbrauchereinheit des Senders wieder eingeschaltet wird.

Bei der vorliegenden Erfindung wird durch die Möglichkeiten der Strommodulation nicht nur ein hoher Signal-/Störabstand, sondern durch den Einsatz der mindestens einen Verbrauchereinheit auch eine minimale E[lektro]M[agnetische]V[erträglichkeit]-Abstrahlung durch kleinste Signalspannungspegel erreicht, wobei sich die Signalspannungspegel als Produkt aus dem Widerstandswert der Verbrauchereinheit und der modulierten Stromstärke ergeben.

Exemplarisch können in diesem Zusammenhang für die Verbrauchereinheit niedrige Abschlußimpedanzen in der Größenordnung von beispielsweise zwölf Ohm und für die Strommodulation Stromstärken in der Größenordnung von einigen wenigen 10⁻² Ampere gewählt werden, so daß die Signalspannungspegel in der Größenordnung von einigen Zehntel Volt liegen.

Dementsprechend liegen die charakteristischen Größen der vorliegenden, vorzugsweise als R[adar-]S[ensor-]I[nterface] ausgebildeten Schnittstellenvorrichtung bei einer exemplarischen Bitzeit von etwa acht Mikrosekunden und bei einem exemplarischen Signalpegel "high" von etwa zwanzig Milliampere. Durch die niedrige Abschlußimpedanz wird nicht nur die EMV-Abstrahlung minimiert, sondern korrespondierend hierzu auch eine hohe EMV-Einstrahlfestigkeit erzielt.

Gemäß einer besonders vorteilhaften Weiterbildung der vorliegenden Erfindung können die Daten durch beliebige Kodierungen, so zum Beispiel mit mindestens einem zyklischen Code, insbesondere mit dem Abramson-Code, mit dem Hamming-Code, mit dem Manchester-Code oder mit dem Manchester II-Code, kodiert werden.

Wenn zweckmäßigerweise in beiden Kommunikationsrichtungen zur Kodierung der digitalen Information der Manchester-Code, insbesondere der Manchester-II-Code, übernommen wird, kann eine Erhöhung der Datenraten durch selbstsynchronisierende Kodierung der digitalen Daten für die Kommunikation in beiden Richtungen erzielt werden. Des weiteren ist durch diese technische Maßnahme - insbesondere bei Manchester II-Kodierung - eine Sicherheit bei der Datenübertragung gewährleistet.

Bei Verwenden der Manchester-Kodierung erfolgt die Synchronisation in der Mitte eines Impulses, insbesondere eines Datenimpulses, und ist dadurch vorteilhafterweise aufgrund des dort jeweils auftretenden Flankenwechsels immer und genau möglich. Zweckmäßigerweise wird bei der Manchester-Kodierung die Zeitdauer zwischen zwei Synchronisationszeitpunkten in der Impulsmitte als der die Taktfrequenz repräsentierende Zeitbereich eingesetzt.

Um einen weiteren Vorteil der Manchester-Kodierung, nämlich die Ein-Bit-Fehlererkennung ausnutzen zu können, werden zweckmäßigerweise beide Impulshälften vor und nach dem Synchronisationszeitpunkt in der Impulsmitte zumindest einmal abgetastet. Das Abtasten erfolgt vorteilhafterweise mittels Mehrfachabtastung innerhalb eines Abtastfensters; somit bleiben die Vorteile bezüglich der Kommunikationsrichtung von Peripherieeinheit zu Steuereinheit vollständig erhalten und können gleichzeitig in der Gegenrichtung genutzt werden.

Mithin ist also generell in erfindungswesentlicher Weise eine gleichzeitige bidirektionale Datenübertragung beider Kommunikationsteilnehmer, zweckmäßigerweise asynchron, möglich.

Der Fachmann auf dem Gebiet derartiger elektrischer und elektronischer Schaltungen, beispielsweise ein Fachhochschulingenieur der Elektrotechnik, wird in bezug auf die vorliegende Erfindung nicht nur die sehr geringen Latenzzeiten sowie die Möglichkeit eines Betriebs schon bei kleinen Versorgungsspannungen, sondern auch eine gewisse Unempfindlichkeit gegenüber Versätzen bei Versorgungsspannung und bei Masse sowie gegenüber Übergangswiderständen zwischen (temporärem) Sender und (temporärem) Empfänger zu schätzen wissen.

Gemäß einer zweckmäßigen Ausführungsform der vorliegenden Erfindung ist dem als Signalleitung zwischen den Kommunikationsteitnehmern ausgebildeten Kommunikationspfad jeweils mindestens eine Diagnosekomparatoreinheit zum Aufwecken ("Wake up"-Modus) der Vorrichtung nach Betreiben im Ruhezustand ("Sleep"-Modus) zugeordnet. Mithin ist sowohl das Verfahren als auch die Vorrichtung gemäß der vorliegenden Erfindung nicht nur "sleep"- und "wake up"-fähig ausgestaltet, sondern weist mittels der Implementierung der Diagnosekomparatoreinheit auch vielfältige Diagnosefunktionen für Fehler auf der Signalleitung auf.

Unabhängig vom oder in Verbindung mit dem "Sleep"-Modus bzw. "Wake up"-Modus kann die Vorrichtung durch Abschalten der Verbrauchereinheit des temporären Empfängers sowie der Stromquelleneinheit auch in einen "Tristate"-Modus versetzt werden. In diesem Zusammenhang empfiehlt sich eine sogenannte "Tristate"-Prüfung, wenn bei Bussystemen innerhalb digitaler Schaltungen die mit dem Datenbus verbundenen Bausteine, das heißt im vorliegenden Falle die Kommunikationsteilnehmer, jeweils abwechselnd als aktiver, stromeinspeisender Sender oder als inaktiver ("tristate"), stromloser Empfänger geschaltet werden können.

Bei der "Tristate"-Prüfung wird nun festgestellt, ob der "Tristate"-Zustand erreicht wird und wie lange der Zustandswechsel dauert. Die "Tristate"-Prüfung im Sinne eines Parametertestes wird im wesentlichen auf eine Strommessung bzw. auf eine Leckstrommessung zurückgeführt:

Eine übliche Methode hierzu ist es, hochohmig über einen Widerstand Strom an den zu prüfenden Pins einzuspeisen. Im "Tristate"-Zustand dürfen die zu messenden Pins den vorgegebenen Spannungswert nicht beeinflussen. Diese müssen dann zwischen dem maximal erlaubten Low-Pegel und dem minimal erlaubten High-Pegel liegen. Beim Funktionstest werden dabei auch die Umschaltzeiten aktiv --> inaktiv bzw. inaktiv --> aktiv gemessen.

Wenn die vorliegende Erfindung in bevorzugter Weise weitergebildet werden soll, so empfiehlt es sich, den Zustand eines vollen Empfangspuffers des Empfängers mittels mindestens einer zur Komparatoreinheit parallelgeschalteten Pufferkomparatoreinheit an den Sender rückzumelden, so daß der Sender bei vollem Empfangspuffer des Empfängers automatisch blockiert werden kann. Hierzu kann zur Komparatoreinheit in zweckmäßiger Weise jeweils mindestens eine Pufferkomparatoreinheit parallelgeschaltet werden, wobei durch die Pufferkomparatoreinheit des Empfängers der Zustand eines vollen Empfangspuffers an den Sender rückmeldbar ist.

Bei der vorliegenden Erfindung ist es von Vorteil, wenn die Vorrichtung durch zumindest eine weitere schaltbare Stromquelleneinheit als insbesondere modulares und/oder insbesondere programmierbares PAS-System zum Aufbereiten elektrischer und nicht-elektrischer Meßgrößen für die Computer-Meßtechnik betreibbar ist; mithin ist die vorliegende Erfindung voll kompatibel zur Einleitungsstromschnittstelle PAS-Interface.

Die vorliegende Erfindung betrifft schließlich die Verwendung eines Verfahrens gemäß der vorstehend dargelegten Art und/oder mindestens einer Vorrichtung gemäß der vorstehend dargelegten Art als Teil mindestens eines integrierten Schaltkreises, insbesondere mindestens eines A[pplication]S[pecific]I[ntegrated]C[ircuit], für mindestens eine Radar-Sensor-Schnittstelleneinheit mindestens eines Radarsystems, insbesondere für kurze Entfernungen (sogenanntes "short range radar system").

So kann durch die vorliegende Erfindung beispielsweise eine schnittstellenartige Verbindung zwischen mindestens einem Radar-Zentralsteuergerät (CSG) als Steuereinheit und mindestens einem Radarsensor als Peripherieeinheit implementiert sein.

Allgemeiner eignet sich die vorstehend erläuterte digitale Schnittstelle gemäß der vorliegenden Erfindung für Wegbausysteme, zum Beispiel Sensoren, jeglicher Art in Automobil- und Industrieanwendungen. Hierbei zeichnet sich die vorliegende Erfindung nicht nur durch
- eine hohe Signalübertragungsrate,
- eine hohe Eigensicherheit bei Leitungskurzschluß und/oder bei Leitungsabfall,
- eine automatische Kollisionserkennung sowie
- eine kostengünstige Hardware- und Softwarerealisierung
aus, sondern insbesondere auch dadurch, daß die vorgenannten Vorteile durch das Realisieren der schaltbaren Empfänger-Widerstände in Verbindung mit einer digitalen Ablaufsteuerung in einer einzigen Schaltungsanordnung kombinierbar sind.

### Kurze Beschreibung der Zeichnungen

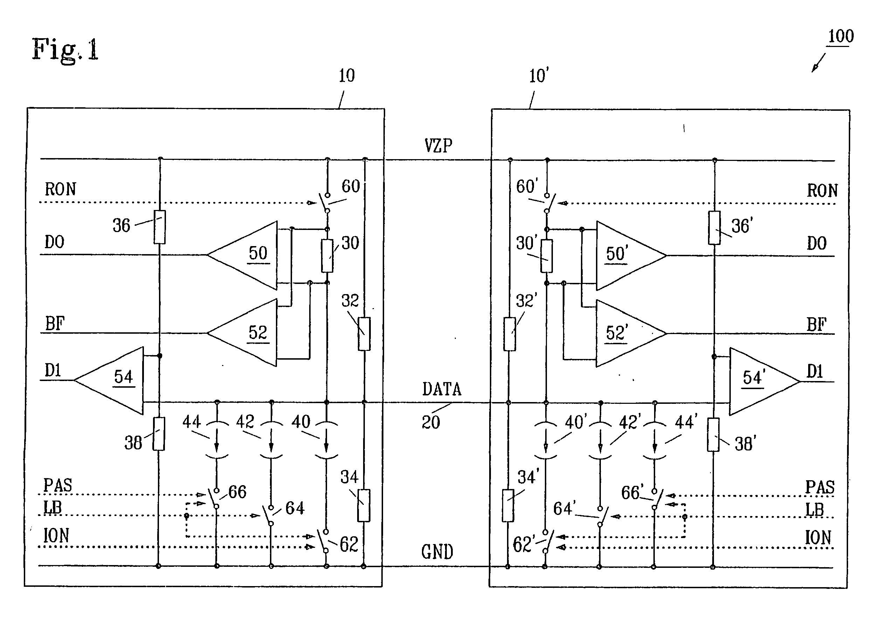

Weitere Ausgestaltungen, Merkmale und Vorteile der vorliegenden Erfindung werden nachstehend anhand des durch die Figuren 1 bis 11 veranschaulichten Ausführungsbeispiels näher erläutert.

Es zeigt:
- Fig. 1: ein schematisches Prinzipschaltbild eines Ausführungsbeispiels einer Vorrichtung gemäß der vorliegenden Erfindung;

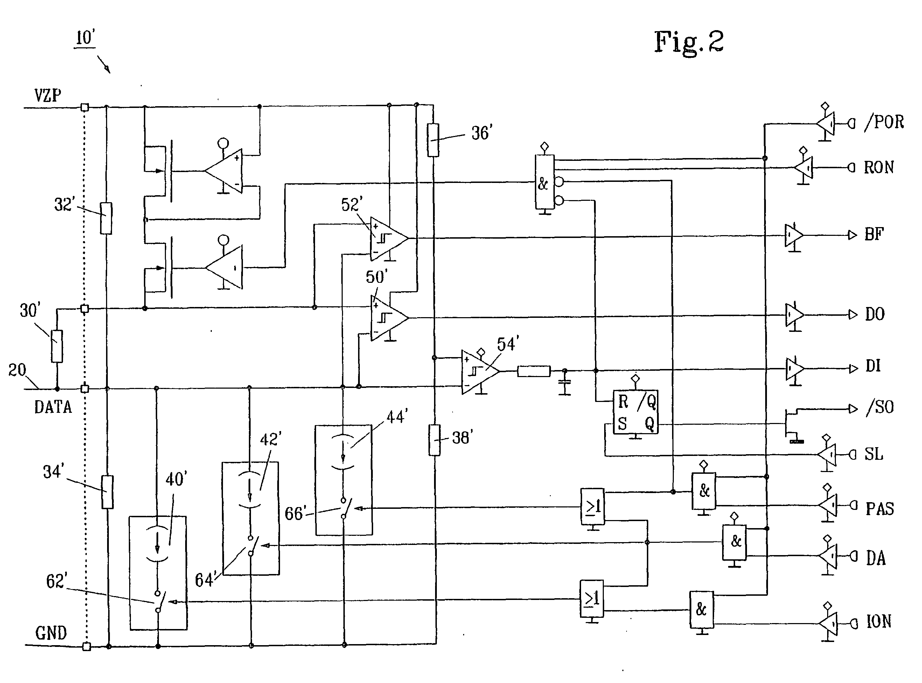

- Fig. 2: ein schematisches Blockschaltbild eines Teils der Vorrichtung aus Fig. 1;

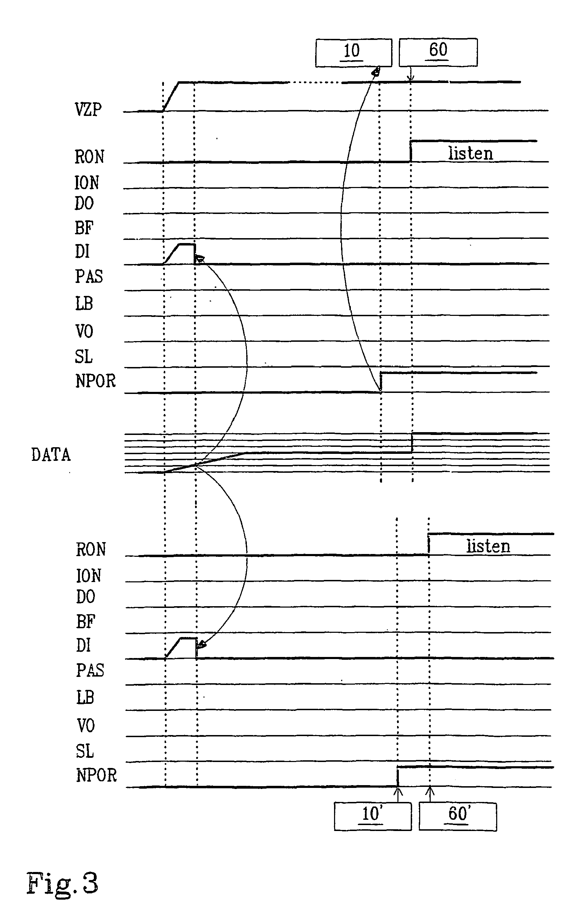

- Fig. 3: ein schematisches Diagramm für den zeitlichen Signalverlauf im "power up"-Zustand der Vorrichtung aus Fig. 1 und 2, wobei sich die obere Bildhälfte auf die Steuereinheit, der mittlere Bildteil auf die in Form von Signalen zu übertragenden Daten und die untere Bildhälfte auf die Peripherieeinheit beziehen;

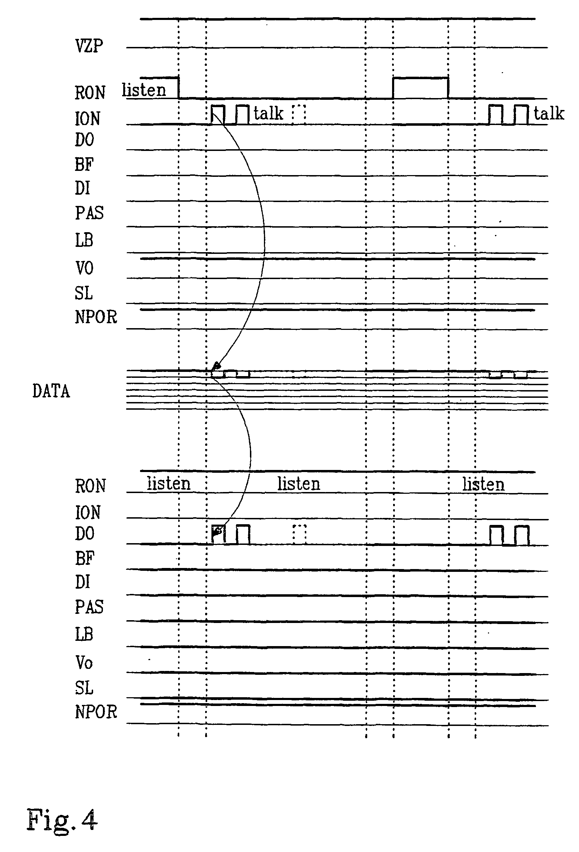

- Fig. 4: ein schematisches Diagramm für den zeitlichen Signalverlauf bei Datenübertragung von der Steuereinheit zur Peripherieeinheit der Vorrichtung aus Fig. 1 und 2, wobei sich die obere Bildhälfte auf die Steuereinheit, der mittlere Bildteil auf die in Form von Signalen zu übertragenden Daten und die untere Bildhälfte auf die Peripherieeinheit beziehen;

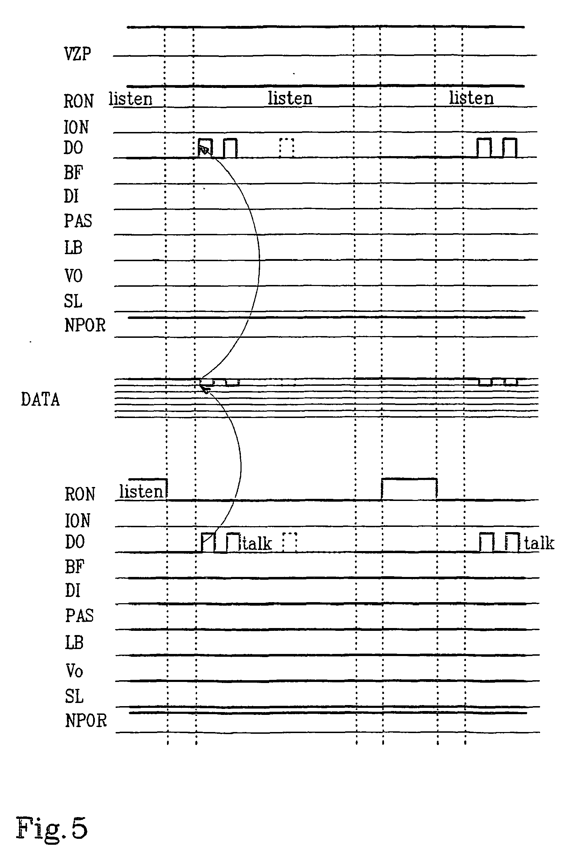

- Fig. 5: ein schematisches Diagramm für den zeitlichen Signalverlauf bei Datenübertragung von der Peripherieeinheit zur Steuereinheit der Vorrichtung aus Fig. 1 und 2, wobei sich die obere Bildhälfte auf die Steuereinheit, der mittlere Bildteil auf die in Form von Signalen zu übertragenden Daten und die untere Bildhälfte auf die Peripherieeinheit beziehen;

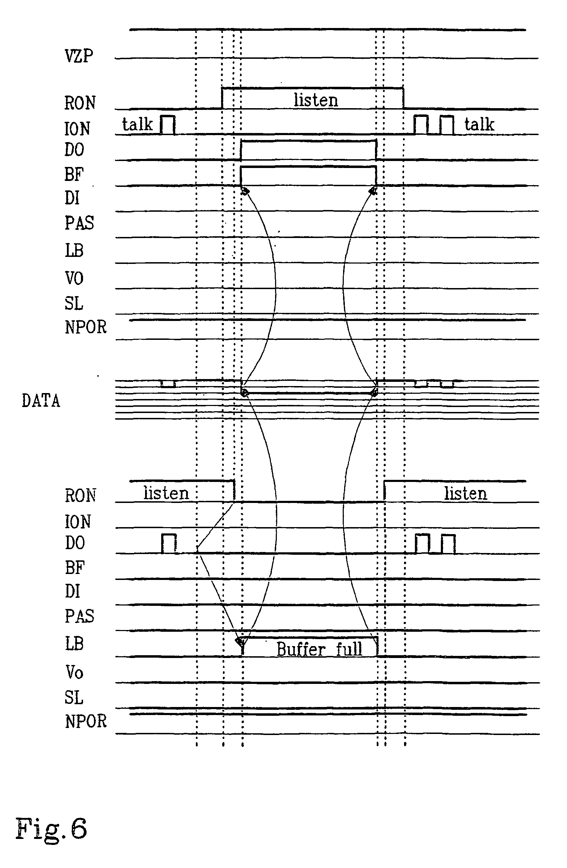

- Fig. 6: ein schematisches Diagramm für den zeitlichen Signalverlauf bei Datenübertragung von der Steuereinheit zur Peripherieeinheit der Vorrichtung aus Fig. 1 und 2 im Zustand eines vollen Empfangspuffers des Empfängers, wobei sich die obere Bildhälfte auf die Steuereinheit, der mittlere Bildteil auf die in Form von Signalen zu übertragenden Daten und die untere Bildhälfte auf die Peripherieeinheit beziehen;

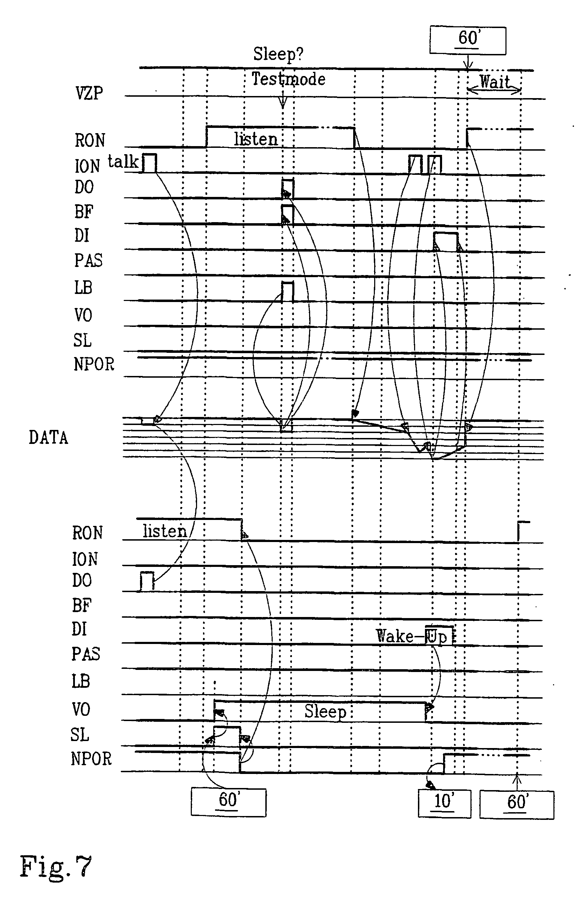

- Fig. 7: ein schematisches Diagramm für den zeitlichen Signalverlauf beim Übergang der Peripherieeinheit in den "Sleep"-Modus bzw. in den "Wake up"-Modus der Vorrichtung aus Fig. 1 und 2, wobei sich die obere Bildhälfte auf die Steuereinheit, der mittlere Bildteil auf die in Form von Signalen zu übertragenden Daten und die untere Bildhälfte auf die Peripherieeinheit beziehen;

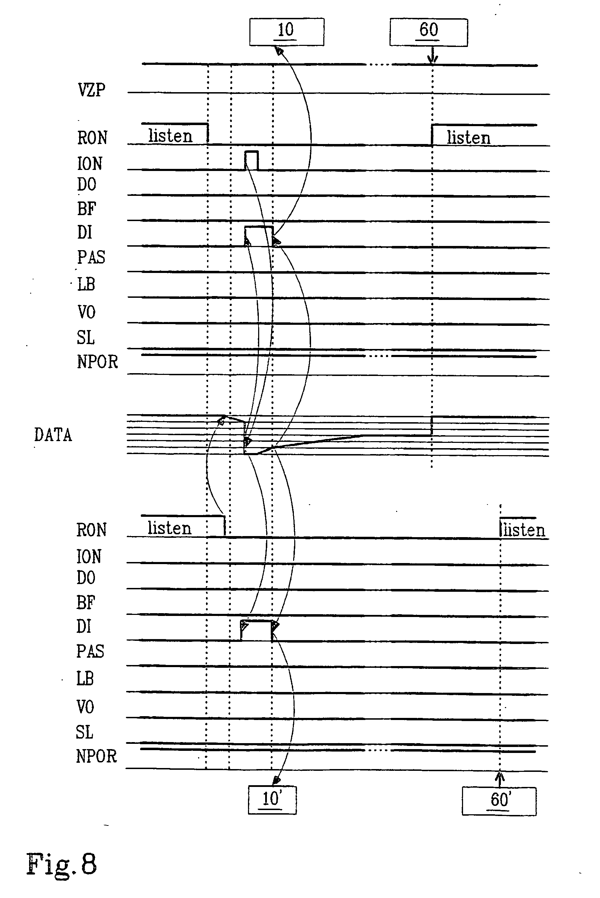

- Fig. 8: ein schematisches Diagramm für den zeitlichen Signalverlauf bei Datenübertragung von der Steuereinheit zur Peripherieeinheit der Vorrichtung aus Fig. 1 und 2 auf derselben Signalleitung, wobei sich die obere Bildhälfte auf die Steuereinheit, der mittlere Bildteil auf die in Form von Signalen zu übertragenden Daten und die untere Bildhälfte auf die Peripherieeinheit beziehen;

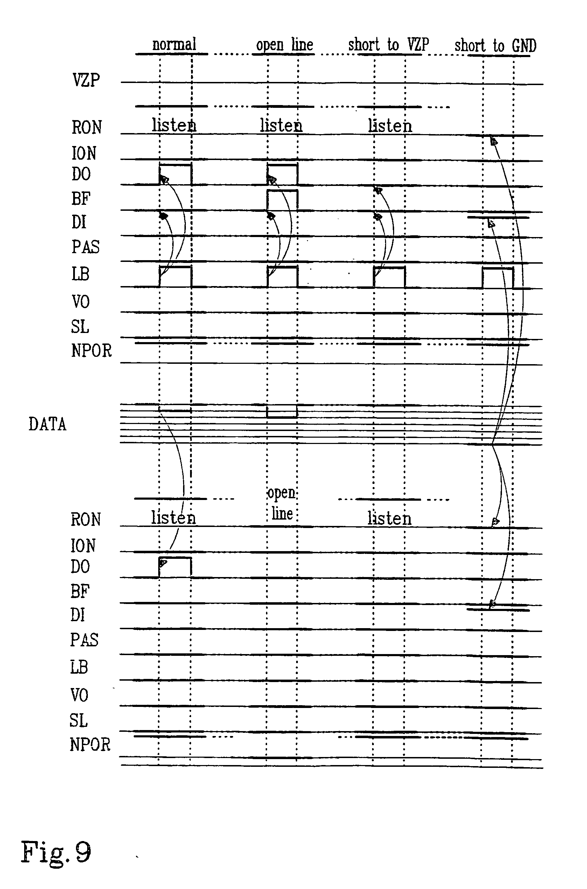

- Fig. 9: ein schematisches Diagramm für den zeitlichen Signalverlauf im Testmodus der Vorrichtung aus Fig. 1 und 2, wobei sich die obere Bildhälfte auf die Steuereinheit, der mittlere Bildteil auf die in Form von Signalen zu übertragenden Daten und die untere Bildhälfte auf die Peripherieeinheit beziehen;

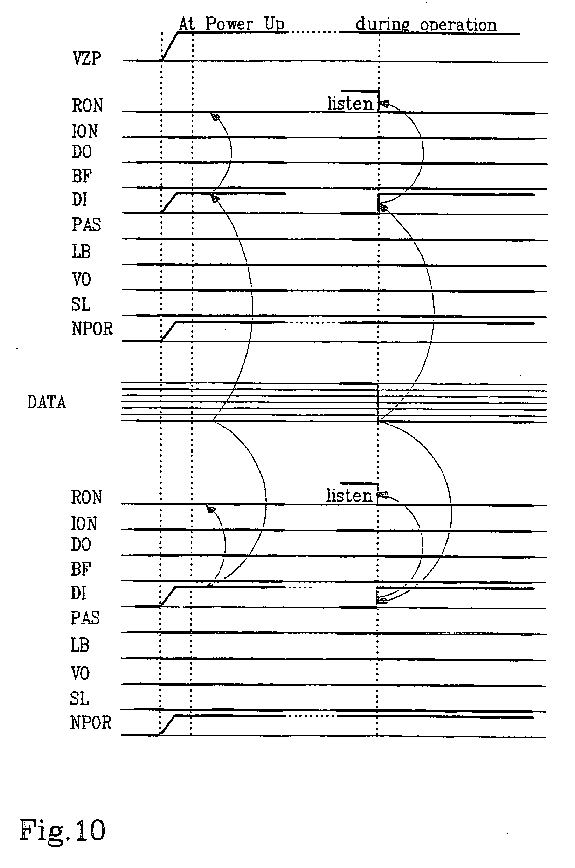

- Fig. 10: ein schematisches Diagramm für den zeitlichen Signalverlauf in der Vorrichtung aus Fig. 1 und 2 beim Kurzschließen auf Erd-oder Massepotential, wobei sich die obere Bildhälfte auf die Steuereinheit, der mittlere Bildteil auf die in Form von Signalen zu übertragenden Daten und die untere Bildhälfte auf die Peripherieeinheit beziehen; und

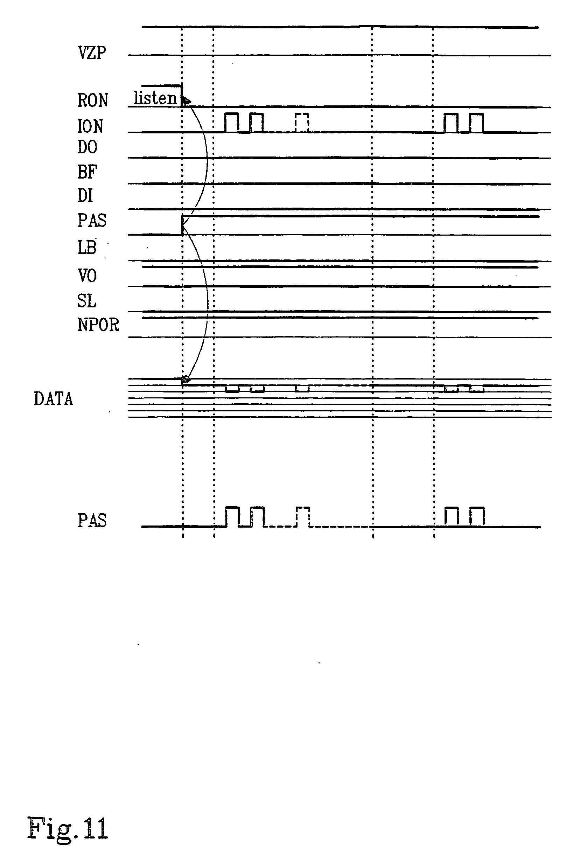

- Fig. 11: ein schematisches Diagramm für den zeitlichen Signalverlauf bei Datenübertragung von der Peripherieeinheit der Vorrichtung aus Fig. 1 und 2 zur Einleitungsstromschnittstelle PAS-Interface, wobei sich die obere Bildhälfte auf die Peripherieeinheit, der mittlere Bildteil auf die in Form von Signalen zu übertragenden Daten und die untere Bildhälfte auf das PAS-Interface beziehen.

Gleiche oder ähnliche Ausgestaltungen, Elemente oder Merkmale sind in den Figuren 1 bis 11 mit identischen Bezugszeichen versehen.

### Bester Weg zur Ausführung der Erfindung

Im schematischen Prinzipschaltbild der Figur 1 ist eine als R[adar-]S[ensor-]I[nterface] ausgebildete Schnittstellenvorrichtung 100 dargestellt. Dieses RSI-Interface ist eine strombasierte bidirektionale Ein-Draht-Schnittstelle mit Manchester-kodierter digitaler Übertragung.

Die Übertragung von in Form von Signalen vorliegenden Daten DATA erfolgt auf einem Kommunikationspfad (= Signalleitung 20) zwischen zwei symmetrisch aufgebauten Kommunikationsteilnehmern 10, 10', nämlich zwischen einer als Radarsteuereinrichtung ausgebildeten Steuereinheit 10 (= sogenannter "Cluster CA110") und einer als Radarsensoreinrichtung ausgebildeten Peripherieeinheit 10' (= sogenannter "Sensor CA100").

Den beiden Kommunikationsteilnehmern 10 bzw. 10', denen beim Übertragen der Daten DATA temporär die Funktion eines Senders bzw. temporär die Funktion eines Empfängers zugeordnet wird, ist gemäß der Darstellung in den Figuren 1 und 2 jeweils eine mittels eines Schaltmittels 60 bzw. 60' schaltbare (--> Bezugszeichen "RON": resistor on) externe Verbrauchereinheit 30 bzw. 30' in Form einer Abschlußimpedanz mit einem Widerstandswert von zwölf Ohm zugeordnet.

Die Verbrauchereinheit 30, die dem als temporärer Sender fungierenden Kommunikationsteilnehmer 10 zugeordnet ist, wird vor dem Übertragen der Daten DATA abgeschaltet und nach dem Übertragen der Daten DATA wieder eingeschaltet.

Der Verbrauchereinheit 30 bzw. 30' ist jeweils eine mittels eines Schaltmittels 62 bzw. 62' schaltbare (--> Bezugszeichen "ION": current source on) Stromquelleneinheit 40 bzw 40' zugeordnet. Hierbei wird die Stromquelleneinheit 40 des temporären Senders getaktet, um die über den Kommunikationspfad 20 zu übertragenden Signale zu erzeugen.

Des weiteren ist der Darstellung der Figuren 1 und 2 jeweils eine der Verbrauchereinheit 30 bzw. 30' zugeordnete Komparatoreinheit 50 bzw. 50' entnehmbar, wobei aus den über den Kommunikationspfad 20 übertragenen Signalen an der Komparatoreinheit 50' des Empfängers entsprechende Ausgangssignale entstehen (--> Bezugszeichen "DO": data output).

Das Prinzip der Kommunikation, das heißt der Übertragung der Daten DATA einschließlich der Fehlerbehandlung ist hierbei den Figuren 3 bis 11 zu entnehmen:

Zunächst sind sowohl der Kommunikationsteilnehmer 10 als auch der Kommunikationsteilnehmer 10' im sogenannten "Hörmodus" (--> Bezugszeichen "listen" in den Figuren 3 bis 11), das heißt sowohl die Verbrauchereinheit 30 des Kommunikationsteilnehmers 10 als auch die die Verbrauchereinheit 30' des Kommunikationsteilnehmers 10' sind eingeschaltet.

Zu Beginn der Übertragung der Daten DATA schaltet der temporäre Sender (= Kommunikationsteilnehmer 10) die ihm zugeordnete Verbrauchereinheit 30 ab; dies bedeutet, daß der Kommunikationsteilnehmer 10 in den "Sendemodus" (--> Bezugszeichen "talk" in den Figuren 3 bis 11) übergeht, indem die auf zwanzig Milliampere ausgelegte Stromquelleneinheit 40 des als temporärer Sender fungierenden Kommunikationsteilnehmers 10 entsprechend getaktet und die über den Kommunikationspfad 20 zu übertragenden Signale auf diese Weise erzeugt werden.

Der den Signalen entsprechende Stromfluß über den Kommunikationspfad 20 ergibt an der (weiterhin eingeschalteten) Verbrauchereinheit 30' des als temporärer Empfänger fungierenden Kommunikationsteilnehmers 10' einen Spannungsabfall, so daß an der dem Empfänger zugeordneten Komparatoreinheit 50' die entsprechenden Ausgangssignale entstehen (--> Bezugszeichen "DO": data output).

Nach Beenden des Übertragens der Daten DATA wird die Verbrauchereinheit 30 des temporären Senders wieder eingeschaltet, so daß sich nunmehr wieder beide Kommunikationsteilnehmer 10, 10' im "Hörmodus" (--> Bezugszeichen "listen") befinden.

Da die Zuordnung der Eigenschaft "Sender" zum Kommunikationsteilnehmer 10 bzw. der Eigenschaft "Empfänger" zum Kommunikationsteilnehmer 10' jeweils nur temporär, das heißt nur während der Dauer der Übertragung der Daten DATA erfolgt, kann nach Abschluß einer Datenübertragung eine weitere Datenübertragung in dieselbe Richtung oder in die umgekehrte Richtung erfolgen; in letzterem Falle wird die Eigenschaft "Sender" dann dem Kommunikationsteilnehmer 10' bzw. die Eigenschaft "Empfänger" dann dem Kommunikationsteilnehmer 10 zugeordnet.

Neben den vorstehend dargelegten Zuständen der Schnittstelle 100 kann diese in erfindungswesentlicher Weise auch weitere Zustände aufweisen:

Hierzu ist zur Komparatoreinheit 50 bzw. 50' jeweils eine Pufferkomparatoreinheit 52 bzw. 52' parallelgeschaltet, wobei durch die Pufferkomparatoreinheit 52' des temporären Empfängers der Zustand eines vollen Empfangspuffers des Empfängers (--> Bezugszeichen "BF": buffer full) an den Sender rückmeldbar ist, wie anhand des schematischen Diagramms für den zeitlichen Signalverlauf im Zustand eines vollen Empfangspuffers des Empfängers gemäß Figur 6 zu entnehmen ist. Hierzu ist eine zweite, jeweils mittels eines Schaltmittels 64 bzw. 64' schaltbare Stromquelleneinheit 42 bzw. 42' zur Stromquelleneinheit 40 bzw. 40' parallelgeschaltet (--> Bezugszeichen "LB": line block buffer full).

Wie anhand Figur 7 veranschaulicht ist, kann die Vorrichtung 100 durch Abschalten der Verbrauchereinheit 30' des temporären Empfängers sowie der Stromquelleneinheit 40 bzw. 40' in einen "Tristate/Sleep"-Modus versetzt werden (--> Bezugszeichen "SL": sleep from Mikroprozessor µC). Aus diesem "Tristate/Sleep"-Modus kann über einen "Low"-Pegel am Kommunikationspfad 20 wieder ein "Wake up" erfolgen, wozu dem als Signalleitung zwischen den Kommunikationsteilnehmern 10 bzw. 10' ausgebildeten Kommunikationspfad 20 jeweils eine Diagnosekomparatoreinheit 54 bzw. 54' zum Aufwecken ("Wake up") der Vorrichtung 100 nach dem Betreiben im Ruhezustand ("Tristate/Sleep"-Modus) zugeordnet ist; beim "Wake up" über den "Low"-Pegel am Kommunikationspfad 20 schält der Diagnosekomparatoreinheit 54 bzw. 54' wieder ein.

In diesem Zusammenhang ist sowohl das Verfahren als auch die Vorrichtung 100 gemäß den Figuren 1 und 2 nicht nur "sleep"- und "wake up"-fähig ausgestaltet, sondern weist mittels der Implementierung der Diagnosekomparatoreinheit 54 bzw. 54' auch vielfältige Diagnosefunktionen für Fehler auf der Signalleitung auf (--> Bezugszeichen "DI": diagnosis).

Hierzu ist der erste, in Figur 1 "untere" Eingang der Diagnosekomparatoreinheit 54 bzw. 54' mit dem als Signalleitung fungierenden Kommunikationspfad 20 verbunden, wohingegen der zweite, in Figur 1 "obere" Eingang der Diagnosekomparatoreinheit 54 bzw. 54' zwischen zwei Widerstände 36 bzw. 36' und 38 bzw. 38' geschaltet ist. Da im Ausführungsbeispiel der Figur 1 der der Versorgungsspannung VZP zugewandte Widerstand 36 bzw. 36' doppelt so groß wie der dem Erd-oder Massepotential GND zugewandte Widerstand 38 bzw. 38' gewählt ist, besteht am zweiten Eingang der Diagnosekomparatoreinheit 54 bzw. 54' das Potential VZP/3.

Im Gegensatz dazu wird der als Signalleitung fungierende Kommunikationspfad 20 und damit auch der erste Eingang der Diagnosekomparatoreinheit 54 bzw. 54' auf das Potential VZP/2 gebracht, indem in jedem der beiden Kommunikationsteilnehmer 10 bzw. 10' zwischen die Versorgungsspannung VZP und das Erd- oder Massepotential GND jeweils mindestens zwei gleich groß gewählte Widerstände 32 bzw. 32' und 34 bzw. 34' geschaltet sind, wobei sich der Verknüpfungspunkt zwischen dem als Signalleitung fungierenden Kommunikationspfad 20 und der jeweiligen Widerstandsleitung zwischen den beiden Widerständen 32 bzw. 32' und 34 bzw. 34' befindet.

Wie dem schematischen Diagramm für den zeitlichen Signalverlauf in Figur 8 entnehmbar ist, ist mittels des der Vorrichtung 100 zugeordneten Verfahrens auch eine Kollisionserkennung sowie eine Wiederinitialisierung im vorgegebenen Modus (--> "master" / "slave") möglich.

Ebenso wird gemäß der Darstellung in Figur 9 durch das vorliegende Verfahren wie auch durch die vorliegende Vorrichtung 100 eine Leitungsdiagnose mittels Testmodus (vgl. hierzu auch Figur 7: "test mode") im Fehlerfall ermöglicht, wobei in diesem Zusammenhang folgende Ergebnisse des Testmodus sich ergeben können:
- ein Normalbetrieb liegt vor ("normal") oder
- die Signalleitung 20 ist abgetrennt("open line") oder
- ein Kurzschluß auf die Leitung der Versorgungsspannung VZP liegt vor ("short to VZP") oder
- ein Kurzschluß auf die Leitung des Erd- oder Massepotential GND liegt vor ("short to GND").

Figur 10 zeigt ein schematisches Diagramm für den zeitlichen Signalverlauf in der Vorrichtung aus den Figuren 1 und 2 beim Kurzschließen auf Erd- oder Massepotential, und zwar zunächst im "power up"-Zustand ("at power up") der Vorrichtung 100 (vgl. hierzu auch Figur 3) und sodann während des eigentlichen Betriebs ("during operation").

Gemäß der Darstellung in Figur 11 ist mit der vorliegenden Vorrichtung 100 auch ein Betrieb als PAS-Schnittstelle realisierbar. Hierzu weist die Vorrichtung 100 eine dritte, jeweils mittels eines Schaltmittels 66 bzw. 66' (--> Bezugszeichen "PAS": PAS mode) schaltbare Stromquelleneinheit 44 bzw. 44' auf, die zur Stromquelleneinheit 40 bzw. 40' parallelgeschaltet ist.

Zusammenfassend läßt sich feststellen, daß durch das dargestellte Verfahren wie auch durch die dargestellte Vorrichtung 100 den hohen Anforderungen, insbesondere auch im Automobilbereich, an Datenrate, Datensicherheit und Kosten der Systemlösung Rechnung getragen wird. Weiterhin ist durch die vorliegende Erfindung die Möglichkeit gegeben, Datenausfälle während der Datenübertragung zu detektieren und zu kompensieren, wobei zugleich eine höhere Robustheit gegen EMV-Einflüsse erzielt wird.

Das Verfahren und die Vorrichtung 100 sind unabhängig von einer speziellen Anwendung einsetzbar, und zwar überall dort, wo eine Datenübertragung zwischen mindestens zwei Kommunikationsteilnehmern erwünscht ist. Außer dem genannten R[adar-]S[ensor-]I[nterface]-Schnittsiellensystem bieten sich hier ein Airbagsystem, die Antriebssteuerung, die Fahrwerk- und Bremsenregelung sowie Getriebesteuervorgänge oder dergleichen an. Ebenso ist an eine Kommunikation weiterer Elektronik, wie etwa Fensterheber oder Türschlösser mit einem Steuergerät, zu denken.

### Bezugszeichenliste

- 100: Vorrichtung
- 10: als temporärer Sender fungierender Kommunikationsteilnehmer
- 10': als temporärer Empfänger fungierender Kommunikationsteilnehmer
- 20: Kommunikationspfad = Signalleitung zwischen temporärem Sender 10 und temporärem Empfänger 10'
- 30: erste Verbrauchereinheit des temporären Senders 10
- 30': erste Verbrauchereinheit des temporären Empfängers 10'
- 32: zweite Verbrauchereinheit des temporären Senders 10
- 32': zweite Verbrauchereinheit des temporären Empfängers 10'
- 34: dritte Verbrauchereinheit des temporären Senders 10
- 34': dritte Verbrauchereinheit des temporären Empfängers 10'
- 36: vierte Verbrauchereinheit des temporären Senders 10
- 36': vierte Verbrauchereinheit des temporären Empfängers 10'
- 38: fünfte Verbrauchereinheit des temporären Senders 10
- 38': fünfte Verbrauchereinheit des temporären Empfängers 10'
- 40: erste Stromquelleneinheit des temporären Senders 10
- 40': erste Stromquelleneinheit des temporären Empfängers 10'
- 42: zweite Stromquelleneinheit des temporären Senders 10
- 42': zweite Stromquelleneinheit des temporären Empfängers 10'
- 44: dritte Stromquelleneinheit des temporären Senders 10
- 44': dritte Stromquelleneinheit des temporären Empfängers 10'
- 50: Komparatoreinheit des temporären Senders 10
- 50': Komparatoreinheit des temporären Empfängers 10'
- 52: Pufferkomparatoreinheit des temporären Senders 10
- 52': Pufferkomparatoreinheit des temporären Empfängers 10'
- 54: Diagnosekomparatoreinheit des temporären Senders 10
- 54': Diagnosekomparatoreinheit des temporären Empfängers 10'
- 60: Mikroprozessor-Trigger des temporären Senders 10
- 60': Mikroprozessor-Trigger des temporären Empfängers 10'
- BF: buffer full
- DATA: Daten
- DI: diagnosis
- DO: data output
- GND: Erd- oder Massepotential
- ION: current source on
- LB: line block buffer full
- listen: Hörmodus
- PAS: PAS mode
- /POR: power on reset
- RON: resistor on
- SL: sleep from µC
- /SO: supply off
- talk: Sendemodus
- VZP: Versorgungsspannung

## Patentansprüche

1. Verfahren zum auf einem Kommunikationspfad (20) vorgesehenen bidirektionalen Übertragen von in Form von Signalen vorliegenden Daten (DATA) zwischen mindestens zwei
- jeweils mindestens eine schaltbare Verbrauchereinheit (30, 30'), die als Abschlussimpedanz dient,
- jeweils mindestens eine schaltbare Stromquelleneinheit (40, 40'), die der Verbrauchereinheit (30, 30') zugeordnet wird, und
- jeweils mindestens eine Komparatoreinheit (50, 50'), die der Verbrauchereinheit (30, 30') zugeordnet wird, und das Signal an der Verbrauchereinheit (30, 30') auswertet, aufweisenden Kommunikationsteilnehmern (10, 10'), denen beim Übertragen der Daten (DATA) zumindest temporär die Funktion eines Senders bzw. zumindest temporär die Funktion eines Empfängers zugeordnet wird, indem
- vor dem Übertragen der Signale die Verbrauchereinheit (30) des Senders abgeschaltet wird,
- zum Erzeugen der über den Kommunikationspfad (20) zu übertragenden Signale die Stromquelleneinheit (40) des Senders entsprechend getaktet wird,
- die auf diese Weise erzeugten Signale über den Kommunikationspfad (20) übertragen werden, so dass an der dem Empfänger zugeordneten Komparatoreinheit (50') durch Auswerten des Signals der empfangsseitigen Verbrauchereinheit (30') entsprechende Ausgangssignale entstehen, und
- nach dem Übertragen die Verbrauchereinheit (30) des Senders wieder eingeschaltet wird.

2. Verfahren gemäß Anspruch 1, **dadurch gekennzeichnet, dass** die Daten (DATA) mit mindestens einem zyklischen Code, mit dem Hamming-Code, mit dem Manchester-Code oder mit dem Manchester II-Code, kodiert werden.

3. Anwendung des Verfahrens nach Anspruch 1 oder 2 in mindestens einer Radar-Sensor-Schnitt stelleneinheit mindestens eines Radarsystems

4. Vorrichtung zum auf einem Kommunikationspfad (20) vorgesehenen bidirektionalen Übertragen von in Form von Signalen vorliegenden Daten (DATA) zwischen mindestens zwei Kommunikationsteilnehmern (10, 10'), denen beim Übertragen der Daten (DATA) zumindest temporär die Funktion eines Senders bzw. zumindest temporär die Funktion eines Empfängers zugeordnet ist, welche Vorrichtung aufweist:
- jeweils mindestens eine schaltbare Verbrauchereinheit (30, 30), die als Abschlussimpedanz dient,
- jeweils mindestens eine schaltbare Stromquelleneinheit (40, 40'), die der Verbrauchereinheit (30, 30') zugeordnet ist, und
- jeweils mindestens eine Komparatoreinheit (50, 50'), die der Verbrauchereinheit (30, 30') zugeordnet ist, und die geeignet ist, das Signal an der Verbrauchereinheit (30, 30') auszuwerten,
- Mittel zum Abschalten der Verbrauchereinheit des temporären Senders vor dem Übertragen der Signale
- Mittel zum Wiedereinschalten der Verbrauchereinheit des temporären Senders nach dem Übertragen der Signale wobei die Stromquelleneinheit (40) des Senders
- zum Erzeugen der über den Kommunikationspfad (20) zu übertragenden Signale entsprechend taktbar ist,
- wobei aus den über den Kommunikationspfad (20) übertragenen Signalen an der dem Empfänger zugeordneten Komparatoreinheit (50') durch Auswerten des Signals der empfangsseitigen Verbrauchereinheit (30') entsprechende Ausgangssignale entstehen.

5. Vorrichtung gemäß Anspruch 4, **dadurch gekennzeichnet, dass** zur Stromquelleneinheit (40, 40') jeweils mindestens eine weitere schaltbare Stromquelleneinheit (42, 42'; 44, 44'), parallelgeschaltet ist.

6. Vorrichtung gemäß mindestens Anspruch 4 oder 5, **dadurch gekennzeichnet, dass** die Vorrichtung (100) durch zumindest eine der weiteren schaltbaren Stromquelleneinheiten (44, 44') zum Aufbereiten elektrischer und nichtelektrischer Messgrößen betreibbar ist.

7. Vorrichtung gemäß mindestens einem der Ansprüche 4 bis 6, **dadurch gekennzeichnet, dass** dem Kommunikationspfad (20) jeweils mindestens eine Diagnosekomparatoreinheit (54, 54') zum Aufwecken ("Wake-up"-Modus) der Vorrichtung (100) nach Betreiben im Ruhezustand ("Sleep-Modus") zugeordnet ist.

8. Vorrichtung gemäß mindestens einem der Ansprüche 4 bis 7, **dadurch gekennzeichnet,**
- **dass** der eine Kommunikationsteilnehmer als mindestens eine Steuereinheit (10), insbesondere als mindestens eine Radarsteuereinrichtung, ausgebildet ist und
- **dass** der andere Kommunikationsteilnehmer als mindestens eine Peripherieeinheit (10'), insbesondere als mindestens eine Radarsensoreinrichtung, ausgebildet ist.

9. Vorrichtung gemäß mindestens einem der Ansprüche 4 bis 8, **dadurch gekennzeichnet, dass** dem Kommunikationspfad (20) jeweils mindestens eine Diagnosekomparatoreinheit (54, 54') zur Diagnose von Kurzschlüssen der Leitung (20) nach Massepotential zugeordnet ist.

## Claims

1. Method for bidirectional transmission, on a communication path (20), of data in the form of signals (DATA) between at least two communication subscribers (10, 10') which each have
- at least one respective switchable load unit (30, 30') used as a terminating impedance,
- at least one respective switchable current source unit (40, 40') which is assigned to the load unit (30, 30'), and
- at least one respective comparator unit (50, 50') which is assigned to the load unit (30, 30') and evaluates the signal on the load unit (30, 30'),
and which, when the data (DATA) are transmitted, are at least temporarily assigned the function of a transmitter or are at least temporarily assigned the function of a receiver by virtue of
- the transmitter's load unit (30) being switched off before the signals are transmitted,
- the transmitter's current source unit (40) being clocked in appropriate fashion for the purpose of producing the signals which are to be transmitted via the communication path (20),
- the signals produced in this manner being transmitted via the communication path (20), so that appropriate output signals are produced on the comparator unit (50') associated with the receiver by evaluating the signal from the reception-end load unit (30'), and
- the transmitter's load unit (30) being switched on again after the transmission.

2. Method according to Claim 1, **characterized in that** the data (DATA) are encoded using at least one cyclic code, using the Hamming code, using the Manchester code or using the Manchester II code.

3. Use of the method according to Claim 1 or 2 in at least one radar sensor interface unit in at least one radar system.

4. Apparatus for bidirectional transmission, on a communication path (20), of data in the form of signals (DATA) between at least two communication subscribers (10, 10') which, when the data (DATA) are transmitted, are at least temporarily assigned the function of a transmitter or are at least temporarily assigned the function of a receiver, which apparatus has:
- at least one respective switchable load unit (30, 30') used as a terminating impedance,
- at least one respective switchable current source unit (40, 40') which is associated with the load unit (30, 30'), and
- at least one respective comparator unit (50, 50') which is associated with the load unit (30, 30') and which is suitable for evaluating the signal on the load unit (30, 30'),
- means for switching off the temporary transmitter's load unit before the signals are transmitted,
- means for switching on the temporary transmitter's load unit again after the signals are transmitted,
- where the transmitter's current source unit (40)
- can be clocked as appropriate in order to produce the signals which are to be transmitted via the communication path (20),
- appropriate output signals being produced from the signals transmitted via the communication path (20) on the comparator unit (50') associated with the receiver by evaluation of the signal from the reception-end load unit (30').

5. Apparatus according to Claim 4, **characterized in that** at least one respective further switchable current source unit (42, 42'; 44, 44') is connected in parallel with the current source unit (40, 40').

6. Apparatus according to at least Claim 4 or 5, **characterized in that** the apparatus (100) can be operated by at least one of the further switchable current source units (44, 44') for the purpose of conditioning electrical and nonelectrical measured variables.

7. Apparatus according to at least one of Claims 4 to 6, **characterized in that** the communication path (20) has at least one respective associated diagnosis comparator unit (54, 54') for waking up ("Wake-up mode") the apparatus (100) after operation in the quiescent state ("Sleep mode").

8. Apparatus according to at least one of Claims 4 to 7, **characterized**
- **in that** one communication subscriber is in the form of at least one control unit (10), particularly in the form of at least one radar control device, and
- the other communication subscriber is in the form of at least one peripheral unit (10'), particularly in the form of at least one radar sensor device.

9. Apparatus according to at least one of Claims 4 to 8, **characterized in that** the communication path (20) has at least one respective associated diagnosis comparator unit (54, 54') for diagnosing short circuits between the line (20) and earth potential.

## Revendications

1. Procédé de transmission bidirectionnelle suivant un chemin de communication de données (DATA) sous la forme de signaux entre au moins deux
- chaque fois au moins une unité d'utilisateur commutable (30, 30') servant d'impédance de terminaison,
- au moins une unité source de courant commutable (40, 40') associée comme unité consommatrice (30, 30') et
- au moins chaque fois une unité de comparaison (50, 50') associée à l'unité de consommation (30, 30') exploitant le signal de l'unité de consommation (30, 30' ayant des participants à la communication (10, 10') qui, lors de la transmission des données (DATA) ont au moins temporairement la fonction d'un émetteur ou au moins temporairement la fonction d'un récepteur en ce que
- avant la transmission des signaux, l'unité de consommation de l'émetteur est coupée,
- pour générer les signaux à transmettre par le chemin de communication (20), l'unité source de courant (40) de l'émetteur est commandée en cadence de façon correspondante,
- les signaux générés de cette façon sont transmis par le chemin de communication pour que l'unité de comparaison (50') associée au récepteur génère par l'exploitation du signal de l'unité de consommation (30') côté réception, des signaux de sortie correspondants et
- après transmission, l'unité de consommation (30) de l'émetteur est de nouveau branchée.

2. Procédé selon la revendication 1,
**caractérisé en ce que**
les données (DATA) sont codées suivant un code cyclique, avec le code Hamming, le code Manchester ou avec le code Manchester II.

3. Application du procédé selon la revendication 1 ou 2 dans au moins une interface de capteurs radar d'au moins un système de radar.

4. Dispositif pour la transmission bidirectionnelle de données (DATA) présentes sous la forme de signaux dans un chemin de communication (20), entre au moins deux participants de communication (10, 10') selon lequel, lors de la transmission des données (DATA), il leur est attribué au moins temporairement, la fonction d'un émetteur ou au moins temporairement la fonction d'un récepteur dispositif comprenant
- au moins une unité de consommation commutable (30, 30') servant d'impédance de terminaison,
- chaque fois au moins une unité source de courant commutable (40, 40') associée à l'unité de consommation (30, 30') et
- a moins une unité de comparaison (50, 50') associée à l'unité de consommation (30, 30') permettant d'exploiter le signal de l'unité de consommation (30, 30'),
- des moyens pour couper l'unité de consommation de l'émetteur temporaire avant la transmission des signaux,
- des moyens pour rebrancher l'unité de consommation de l'émetteur temporaire après la transmission des signaux,
- l'unité source de courant (40) de l'émetteur étant
• commandée en cadence pour générer les signaux à transmettre par le chemin de communication (20),
• à partir des signaux transmis par le chemin de communication (20) à l'unité de comparaison (50') associée au récepteur, on génère des signaux de sortie correspondant par l'exploitation des signaux de l'unité de consommateur (30'), côté réception.

5. Dispositif selon la revendication 4,
**caractérisé en ce que**
chaque unité source de courant (40, 40') a en parallèle une autre unité source de courant commutable (42, 42' ; 44, 44').

6. Dispositif selon les revendications 4 ou 5,
**caractérisé en ce que**
le dispositif (100) est géré par au moins l'une des autres unités sources de courant commutables (40, 40') pour préparer des grandeurs de mesures électriques et non électriques.

7. Dispositif selon l'une des revendications 4 à 6,
**caractérisé en ce qu'**
une unité de comparaison de diagnostique (54, 54') est associée au chemin de communication (50) pour réveiller (mode « réveil ») le dispositif (100) après le fonctionnement en position de repos (mode « sommeil »).

8. Dispositif selon au moins l'une des revendications 4 à 7,
**caractérisé en ce que**
- l'un des participants à la communication est réalisé au moins comme unité de commande (10), notamment au moins comme une installation de commande de radar et
- l'autre participant à la communication est réalisé au moins comme une unité périphérique (10'), notamment au moins comme une installation de capteur radar.

9. Dispositif selon au moins l'une des revendications 4 à 8,
**caractérisé en ce qu'**
au moins une unité de comparaison de diagnostique (54, 54') est associée au chemin de communication (20) pour diagnostiquer des courts-circuits de ligne vers le potentiel de masse.
